Europäisches Patentamt

**European Patent Office**

Office européen des brevets

(19)

(11) Publication number: **0 141 630**
A2

(12)

# EUROPEAN PATENT APPLICATION

(21) Application number: **84307412.1**

(51) Int. Cl.⁴: **C 08 F 8/44**

(22) Date of filing: **26.10.84**

---

(30) Priority: **27.10.83 US 546155**

(43) Date of publication of application: **15.05.85**
Bulletin 85/20

(84) Designated Contracting States: **BE CH DE FR GB IT LI LU NL SE**

(71) Applicant: **E.I. DU PONT DE NEMOURS AND COMPANY, 1007 Market Street, Wilmington Delaware 19898 (US)**

(72) Inventor: **Statz, Robert Joseph, 115 Beverly Drive, Kennett Square Pennsylvania 19348 (US)**

(74) Representative: **Jones, Alan John et al, CARPMAELS & RANSFORD 43 Bloomsbury Square, London, WC1A 2RA (GB)**

---

(54) **Tough, transparent lead ionomers with greater than 100% neutralization.**

(57) Ionic direct and graft copolymers of $\alpha$-olefins and $\alpha,\beta$-ethylenically unsaturated carboxylic acid are provided using from above 1 to about 3 times the amount of lead salt necessary to neutralize all of the copolymerized acid. The resulting ionomers contain high levels of lead and are tough, clear and melt-processible. Accordingly, they are useful in radiation shields.

EP 0 141 630 A2

1

## TITLE

TOUGH, TRANSPARENT LEAD IONOMERS WITH
GREATER THAN 100% NEUTRALIZATION

### BACKGROUND OF THE INVENTION

#### Field of the Invention

This invention relates to ionomers and more specifically it relates to ionomers overneutralized with divalent lead ions.

#### DESCRIPTION OF THE PRIOR ART

Ionomers of copolymers such as ethylene/methacrylic acid or ethylene/acrylic acid are normally prepared by reacting the acid copolymers with an ion source. Hence zinc ionomers can be produced by neutralizing a portion of the copolymerized methacrylic or acrylic acid with zinc oxide or zinc acetate and sodium ionomers are produced by reacting sodium carbonate, sodium hydroxide or sodium acetate with the ethylene acid copolymers.

As the percent neutralization of the copolymerized acid is increased the tensile strength, flexural modulus, and hardness are all increased. Conversely the melt flow as measured by melt index is decreased.

As the percent ionization or neutralization is increased above 90% the melt flow is drastically reduced. Before 100% of the copolymerized acid is neutralized the melt viscosity becomes so high that the ionomers can no longer be considered thermoplastic because they cannot be extruded or molded. At these very high degrees of ionization the ionomers also appear to lose their useful physical properties. They have greatly reduced elongation and tensile strength.

AD-5157

1

Rees, U.S. 3,437,718 discloses ionomers with up to 100% neutralization. It teaches that small excess quantities of the crosslinking agent, i.e., the neutralizing agent are necessary to carry the neutralization to completion. Further it teaches that large excess quantities of the crosslinking agent are to be avoided in that they may have a detrimental effect on the polymer blends.

Lundberg, U.S. 3,931,021 discloses a method for controlling the viscosity of organic liquids, such as lubricating oils, by incorporating in such oils small amount of an ionic polymer and a cosolvent for the ionic groups of the polymer. The ionic polymers can be both plastic and elastomeric polymers. The hydrocarbon polymer from which the ionic polymer is prepared must be soluble in the organic liquid at least to the extent of one gram polymer per 100 milliliter organic liquid. Accordingly, it is disclosed that highly crystalline polymers are to be avoided since they tend not to be soluble in the relatively non-polar organic liquids. Acceptable polymers must possess a level of crystallinity of less than 25% and accordingly, acceptable polymers can be considered substantially noncrystalline. These noncrystalline polymers are then neutralized with base materials selected from groups IA, IIA, IB and IIB of the Periodic Table of the Elements (and also lead, tin, and antimony). Preferred class of polar cosolvents are disclosed to be alcohols and amines. The degree of neutralization of the ionomeric groups can vary from 50-500 mole percent.

Nagai et al., U.S. 4,129,524 discloses composition for an acrylic radiation shielding material. The material is prepared by polymerizing a mixture of monomers including lead acrylate or lead methacrylate and methylmethacrylate, hydroxyalkyl acrylate, hydroxyalkyl methacrylate and styrene.

Nagai et al., U.S. 4,182,821 discloses a method for producing a lead containing monomer composition and the process for polymerization thereof to form a radiation shielding plastic. The monomers disclosed are methylmethacrylate, methacrylic acid, hydroxyalkyl acrylate, hydroxyalkyl methacrylate and styrene.

## SUMMARY OF THE INVENTION

According to the present invention there is provided ionic direct copolymer and graft copolymer wherein (A) said direct copolymer is the copolymer of $\alpha$-olefin having the formula $R-CH=CH_2$, where R is a radical selected from the class consisting of hydrogen and alkyl radicals having from 1 to 8 carbon atoms and $\alpha,\beta$-ethylenically unsaturated carboxylic acid having from 3 to 8 carbon atoms, the acid moieties being randomly or nonrandomly distributed in the polymer chain, (1) the $\alpha$-olefin content of the copolymer being at least 50 mole percent, (2) the unsaturated carboxylic acid content of the copolymer being from about 0.2 to about 25 mole percent, and (3) any other monomer component optionally copolymerized in said copolymer being monoethylenically unsaturated, and

(B) said graft copolymer being obtained by grafting 0.1 to 5 percent by weight of $\alpha,\beta$-unsaturated carboxylic acid having 3 to 8 carbon atoms or an unsaturated carboxylic acid anhydride onto a preformed polyolefin backbone derived from ethylene or ethylene and $C_3$ to $C_8$ $\alpha$-olefin, in which polyolefin backbone any other optionally copolymerized monomer component is monoethylenically unsaturated,

0141630

4

said direct or graft acid copolymers having been ionized by neutralization with divalent lead ions, using from above 1 to about 3 times the amount of lead salt necessary to neutralize all of the copolymerized acid, said ionic copolymers having solid state properties characteristic of crosslinked polymers and melt-fabricability properties characteristic of uncrosslinked thermoplastic polymers.

### DETAILED DESCRIPTION OF THE INVENTION

Lead ionomers appear to be distinctly different from the sodium, zinc or other similar ionomers referred to above. The distinction is that lead ionomers with higher levels of ionization or neutralization can be produced and the ionomers retain their melt processibility, clarity and physical properties.

Experiments have indicated that even 2 to 3 times the theoretical amounts of lead salts needed to neutralize all of the acid can be added to ethylene/methacrylic or acrylic acid copolymers. The resulting ionomers contain significant levels of lead, are tough, and clear and are melt processible.

Extractability studies of the lead ionomers clearly indicate that the lead ions are strongly bound to the copolymer matrix (see Table below).

4

| Sample Designation | A | B | C | Background Water |
|---|---|---|---|---|
| Description of Ionomer | 100% Neut Pb Ionomer (15% MAA/E Resin) | 150% Neut Pb Ionomer (15% MAA/E Resin) | 200% Neut Pb Ionomer (15% MAA/E Resin) | - |
| % Lead by Weight in Ionomer | 16 | 19 | 22 | - |
| Wt. of Extraction Sample, g | 9.0495 | 6.6525 | 16.6839 | - |
| Total Lead in Extraction Sample, g | 1.45 | 1.26 | 3.67 | - |
| Total Water Volume, ml | 200 | 200 | 200 | 200 |
| Concentration of Lead in Extractor Fluid, $\mu$g/ml | 410 | 140 | 170 | 0 |
| Total lead in Extractor Fluid, g | 0.082 | 0.028 | 0.034 | 0 |
| Extraction Time, hr | 7.5 | 18 | 18 | |
| Weight Loss, % | 0.91 | 0.42 | 0.20 | |
| Weight Loss, %/ Extraction Time, hr | 0.12 | 0.02 | 0.01 | |

Conclusion: No appreciable lead loss occurs. Extended exposure to water does not cause additional lead loss.

The small lead loss probably occurs upon initial water exposure and is attributable to trace levels of unreacted lead salts.

It has been discovered that lead ionomers containing high lead levels can be prepared by overneutralization of ethylene/methacrylic acid copolymers. The resulting lead ionomers are clear and tough and contain high lead levels. These materials are good shields for radiation and they can be fabricated by extrusion or injection-molding techniques. The transparent, tough lead ionomers can be used as radiation shields for protection of workers engaged in X-ray work or in work with radioactive isotopes. They could also be used in areas where workers are exposed to low level radiation from nuclear generation facilities.

For the purposes of the present invention the ionic copolymers can be selected from the group of direct copolymers and graft copolymers wherein the direct copolymer is the copolymer of $\alpha$-olefin having the formula $R-CH=CH_2$, where R is a radical selected from the class consisting of hydrogen and alkyl radicals having from 1 to 8 carbon atoms and $\alpha,\beta$-ethylenically unsaturated carboxylic acid having from 3 to 8 carbon atoms, the acid moieties being randomly or nonrandomly distributed in the polymer chain, and any other monomer component optionally copolymerized in said copolymer being monoethylenically unsaturated, and wherein the graft copolymer can be obtained by grafting 0.1 to 5 percent by weight of $\alpha,\beta$-unsaturated carboxylic acid having 3 to 8 carbon atoms or an unsaturated carboxylic acid anhydride onto a preformed polyolefin backbone derived from ethylene or ethylene and $C_3$ to $C_8$ $\alpha$-olefin, in which polyolefin backbone any other optionally copolymerized monomer component is monoethylenically unsaturated, the direct or graft acid copolymers having been ionized by neutralization with divalent lead ions, using from above 1 to about 3 times the amount of lead salt necessary to neutralize all of the copolymerized acid. These ionic copolymers have solid-state properties characteristic of cross-linked polymers and melt fabricability properties characteristic of uncrosslinked thermoplastic polymers.

For best combination of shielding and optical properties preferably the amount of lead salt used is from about 1.25 to about 2.5 times the amount necessary to neutralize all of the copolymerized acid and most preferably it is from about 1.75 to about 2.25 times the amount so needed.

The amount of α-olefin in the copolymer should be at least 50 mole percent, preferably from about 80% to about 98 mole percent, and most preferably from about 91 to about 96 mole percent.

The copolymers should contain enough ethylene to maintain crystallinity while maximizing acid levels to allow for incorporation of maximum lead levels. Accordingly the unsaturated carboxylic acid content of the copolymer should be from about 0.2 to about 25 mole percent, preferably from about 2 to about 20 mole percent and most preferably from about 4 to about 9 mole percent.

The preferred α-olefin monomer is ethylene.

The preferred unsaturated carboxylic acids are monocarboxylic acids such as acrylic acid and methacrylic acid.

Preferred third comonomers that can be included in the ionic copolymers of the present invention are vinyl esters such as vinyl acetate, alkyl methacrylates and alkyl acrylates, such as methylmethacrylate and n-butyl acrylate, and vinyl ethers.

Accordingly, lead ionomers of the present invention can be prepared from copolymers such as ethylene/acrylic acid, ethylene/methacrylic acid and ethylene/n-butyl acrylate/methacrylic acid.

The ionic copolymers of the present invention can be prepared by direct or graft copolymerization. The direct copolymerization process comprises polymerizing ethylene, unsaturated carboxylic acid and any additional optional comonomer in the presence of free radical polymerization initiator at temperatures of from about 140 to about 260°C, preferably from about 140 to about 200°C at high pressures, e.g., at least about 110 mPa (16000 psi) preferably from about 138 mPa (20000 psi) to about 345 mPa (50000 psi) followed by neutralization of the carboxylic acid groups of the resultant direct copolymer with lead ions. A suitable polymerization process is discussed in detail in U.S. 3,264,272 the disclosure of which patent is hereby incorporated by reference.

The graft copolymerization process can be carried out by polymerizing ethylene and any additional optional comonomer in the presence of free radical polymerization initiator at temperatures of from about 140 to about 260°C, preferably from about 160 to about 220°C at high pressures e.g., at least about 110 mPa (16000 psi), preferably from about 138 mPa (20000 psi) to about 345 mPa (50000 psi), and grafting unsaturated carboxylic acid or anhydride onto the ethylene or ethylene/optional comonomer polymer backbone followed by neutralization of the carboxylic acid groups of the resultant graft copolymer with metal ions.

The lead ionomers of the present invention can be prepared by placing the ethylene acid copolymers on a mill or in an extruder and heating at a temperature of from about 190 to about 250°C. They are subsequently reacted with lead acetate, lead oxide or a mixture of these salts. Small amounts of water are used to activate the lead salts.

The following examples serve to illustrate the present invention. All parts, percentages and proportions are by weight unless otherwise indicated.

## Example 1
### Roll Mill Preparation of Lead Ionomers

An 85% ethylene, 15% methacrylic acid copolymer (500 g) was dusted with 0.1 g of "Irganox" 1010 and placed on a 6" roll mill at 150°C. The mixture was milled until molten. A solution of 165.4 g of lead (II) acetate dissolved in distilled water was then added dropwise to the mixture on the mill. After all of the solution was added, the temperature was slowly raised to 190°C. The blend was milled at 190°C until a homogeneous transparent lead ionomer was formed. The composition of this and other lead ionomers prepared are summarized in Table I.

TABLE I

Composition of Lead Ionomers Prepared on Roll Mill

| Acid Copolymer (82 E/18 MAA) g | Acid Copolymer (85 E/15 MAA) g | "Irganox"1010 g | PbAc$_2$ g | Theoretical % Neutralization |
|---|---|---|---|---|
| – | 125 | .1 | 21 | 50 |
| – | 500 | .1 | 165.4 | 100 |
| – | 125 | .1 | 63 | 150 |
| – | 125 | .1 | 84 | 200 |
| 100 | | .1 | 40 | 100 |
| 100 | | .1 | 60 | 150 |
| 100 | | .1 | 80 | 200 |

11

## Example 2

### Flex Moduli and Tensile Strengths

The flexural moduli and tensile strengths of the lead ionomers of Table I were measured by ASTM No. D790 and ASTM No. D1708, respectively. These measurements showed the lead ionomers to be flexible and tough. Results are summarized in Tables II and III.

### TABLE II

### FLEX MODULUS

| | Flex Modulus | |
|---|---|---|
| Composition | Pa x $10^3$ | (Kpsi) |
| 85% E/15% MAA acid copolymer | 72.7 | 10.555 |
| acid copolymer neut. 50% | 388.9 | 56.39 |
| acid copolymer neut. 100% | 431.4 | 62.57 |
| acid copolymer neut. 150% | 476.0 | 69.0 |
| acid copolymer neut. 200% | 382.8 | 55.52 |

TABLE III

TENSILE STRENGTH

| Composition | Yield | | Maximum | | Break | | Strain | |
|---|---|---|---|---|---|---|---|---|
| | Pa x $10^3$ | KPSI | Pa x $10^3$ | KPSI | Pa x $10^3$ | KPSI | Yield | Break |
| 85% E/15% MAA acid copolymer | 21.0 | 3.04 | 32.1 | 4.65 | 32.1 | 4.65 | 9.8 | 262.3 |
| acid copolymer neut. 50% | 17.2 | 2.48 | 25.4 | 3.69 | 25.4 | 3.68 | 8.9 | 382.0 |
| acid copolymer neut. 100% | 18.3 | 2.65 | 32.1 | 4.65 | 32.1 | 4.65 | 8.9 | 341.8 |
| acid copolymer neut. 150% | 20.5 | 2.98 | 74.9 | 5.06 | 34.9 | 5.06 | 8.7 | 338.6 |
| acid copolymer neut. 200% | 21.8 | 3.16 | 33.0 | 4.79 | 33.0 | 4.79 | 12.3 | 273.7 |

13

## Example 3

### Lead Concentrate Preparation

A lead concentrate was prepared using the following method: To a small Banbury mixer was added 100 g of E/15 MAA copolymer. After the material had melted, 254 g of lead (II) acetate were added and then 149 g of lead oxide were added. When steam and mechanical agitation had raised the temperature to 190°C, the material was removed. The material formed was a heavy, off-white, brittle lead concentrate.

The lead concentrate was then chopped into small pieces and diluted on a 3" roll mill with acid copolymer to form stable clear lead ionomers. For instance, 68.1 g of E/15 MAA were added to a 3" roll mill at 150°C. When the material was well melted, 31.9 g of the lead concentrate were added along with the dropwise addition of 30 ml of $H_2O$. Roll milling was continued until a clear homogeneous ionomer was formed as determined by visual observation. The use of this and different amounts of lead concentrate are summarized in Table IV.

### TABLE IV
#### ROLL MILL DILUTION OF LEAD CONCENTRATE

| Neutralization, % | Lead Concentrate, g | Acid Copolymer, g |
|---|---|---|
| 100 | 31.9 | 68.1 |
| 150 | 40.6 | 59.4 |
| 200 | 47.2 | 52.8 |

## Example 4

### Preparation by Extrusion

A "salt and pepper" blend of 715 g of lead concentrate (prepared as in Example 3) and 1942 g of E/15 MAA acid copolymer were slowly fed to a Werner and Pfleiderer twin screw extruder. The temperature was set at 220°C. The molten ionomer was passed over

13

14

dry ice and cut by a strand cutter. This method produced transparent ionomers. The composition of this and other lead ionomers prepared according to this method are summarized in Table V.

## TABLE V

### LEAD IONOMERS PREPARED BY EXTRUSION

| Lead Concentrate g | E/15 MAA Copolymer g | Theoretical Neutralization, % |
|---|---|---|
| 715 | 1942 | 150 |
| 798 | 2268 | 100 |
| 998 | 2268 | 125 |
| 518 | 842 | 175 |
| 562 | 898 | 200 |
| 794 | 1007 | 225 |
| 883 | 1007 | 250 |

## Example 5

### Impact Resistance

A dart variable height impact test (ASTM NO. D8029-72) was performed on a lead ionomer having the following composition:E/15% MAA base resin neutralized 150%

A 1/4"-thick plaque of this material was melt-pressed at a temperature of 165°C. This material exhibited only a slight indentation when the dart was dropped from the maximum height, applying a force of 320 inch/pounds to the 1/4"-thick sample.

## Example 6

### Melt Flow of Lead Ionomers

A Tinius-Olsen Melt Indexer was used to determine the melt flow of a variety of lead ionomers. The temperature was set at $190 \pm 2°C$ and the applied weight was 2160 gms. Melt index values show that lead ionomers, unlike their sodium and zinc counterparts, possess melt flow at high degrees (even 100%) of neutralization. Sodium and zinc ionomers have a melt flow of 0 at neutralization levels even

14

15

approaching 100 mole %. The results are summarized in Table VI.

## TABLE VI

### MELT INDICES

| Composition of Base Resin | Theoretical % Neutralization | Preparative Method | Melt Index (g/10 min) |
|---|---|---|---|
| 85% E/15% MAA | 50 | Roll Mill (lead salts in sol'n) | 13.4 |
| " | 100 | " | 2.33 |
| " | 150 | " | .66 |
| " | 200 | " | .78 |
| 82% E/18% MAA | 150 | " | .90 |
| " | 100 | " | .96 |
| 85% E/15% MAA | 100 | Roll Mill (lead salts in paste) | .97 |
| " | 150 | " | 1.05 |
| " | 150 | Extrusion | 1.61 |

## Example 7

### Radiation Shielding from $I^{125}$

The shielding efficiency of lead ionomers against an $I^{125}$ weak $\gamma$-source was determined.

A standard Iodine$^{125}$ solution was obtained by dilution of 1-2 $\mu$l of Aneusham $^{125}$I-iodide into 2 ml of 0.1$\underline{M}$ KI in 0.05 $\underline{M}$ borate of pH 8.5. 100 $\mu$l of this standard Iodine$^{125}$ solution was placed in a plastic tube (12 x 75 mm) and stoppered tightly. The tube was placed 0.65 cm in front of a lead sheet. The sample plaque of lead ionomer was placed 0.65 cm in front of the radiation source. A Ludlum Model

16

44-3 gamma scintillation probe was placed 2.7 cm from the front wall of the source tube. The probe was directed toward the center of the source tube. The probe was connected to a Ludlum Model 3 Geiger Counter.

Measurements were taken of background radiation, radiation w/ no shield, and radiation w/ 1/8" and 1/4" shields of sufficient area to cover probe face (3" sq). The lead ionomer shields were composed of 85% E/15% MAA base resin neutralized 50, 100, 150 and 200%, respectively. These plaques showed excellent shielding efficiency. Results are summarized in Table VII.

### TABLE VII

| Neutralization by Pb, % | Radiation Shielded, % | |
|---|---|---|
| | 1/4" shield | 1/8" shield |
| 50 | 80 | 59 |
| 100 | 94 | 80 |
| 150 | 98 | 91 |
| 200 | 99 | 94 |

### Example 8

### Radiation Shielding from $Co^{57}$

The shielding efficiency of lead ionomers against $Co^{57}$ radiation was determined.

A sample of $Co^{57}$ was left in its glass bottle and placed inside a three-sided lead shielding house. The source was placed 6" from the open side. A Ludlum Model 44-3 scintillation probe was placed 5" from the open side outside the house at the same level and directed toward the $Co^{57}$. The probe was again attached to a Ludlum Model 3 scintillation counter.

Sample plaques of lead ionomers of Ex. 7 were placed directly in front of the probe for

16

17

measurement of radiation.  Values for background
radiation and unshielded radiation were also
determined.  The stronger gamma source reduces the
shielding efficiency of the lead ionomers.  Results
are summarized in Table VIII.

TABLE VIII

| Neutralization by Pb, % | Radiation Shielded, % 1/8" shield |
|---|---|
| 50 | 6 |
| 100 | 12 |
| 150 | 18 |
| 200 | 24 |

### Example 9

### Radiation Shielding from $P^{32}$

The shielding efficiency of lead ionomers
against $P^{32}$ radiation was determined.

A 200 $\mu\ell$ sample containing 200 $\mu$ curies of
soluble $P^{32}$ placed in a plastic tube and tightly
stoppered.  The experimental design was the same as
in Example 8 with three modifications.  The distance
from source to open face was five inches and from
open face to probe was 4".  The detection device used
was an Eberline Geiger Counter Model E-120, Serial
#7123, which has its own probe for $\beta$ detection.

Sample plaques were placed directly against
a probe.  Shielding values for the lead ionomers of
Ex. 7 were compared to those of sodium and zinc
ionomers of the same base resin neutralized 58 and
59%, respectively.

Lead ionomers show excellent shielding
efficiency, against a $\beta$ source.  Results are
summarized in Table IX.

18

## TABLE IX

| Neutralization | Radiation Shielded, % | |
|---|---|---|
| by Pb, % | 1/4" Shield | 1/8" Shield |
| 50 | 100 | 97 |
| 100 | 100 | 98 |
| 150 | 100 | 100 |
| 200 | 100 | 100 |
| 60[1] | 95 | - |

Footnote:

(1) 58 and 59% neutralized with sodium and zinc, respectively.

### Example 10

### Radiation Shielding from $Fe^{59}$

The shielding efficiency of lead ionomers against $Fe^{59}$ radiation was determined.

A source of 100 curies of $Fe^{59}$ as $FeCl_2$ in 0.1 $\underline{M}$ HCl of total volume of $100\mu$l was left in its glass container. The source was placed in a three-sided lead house. Only a portion of the 4th side directly in front of the $Fe^{59}$ source was left open to shield the operator from background radiation. A Ludlow Model 44-3 scintillation probe was placed 2.0" from the open portion of the lead wall and directed toward the $Fe^{59}$ source. The front glass of the $Fe^{59}$ source was located 4.5" inside the house from the open wall.

Radiation measurements were again taken with the lead ionomer plaques of Ex. 7 as shields. Lead ionomers show further reduced shielding efficiency against this hot gamma source. Results are summarized in Table X.

### TABLE X

| Neutralization by Pb, % | Radiation Shielded, % 1/4" Shield |
|---|---|
| 50 | 11 |
| 100 | 13 |
| 150 | 15 |
| 200 | 17 |

20

## CLAIMS

1. Ionic direct copolymer and graft copolymer wherein

(A) said direct copolymer is the copolymer of α-olefin having the formula $R-CH=CH_2$, where R is a radical selected from the class consisting of hydrogen and alkyl radicals having from 1 to 8 carbon atoms and α,β-ethylenically unsaturated carboxylic acid having from 3 to 8 carbon atoms, the acid moieties being randomly or nonrandomly distributed in the polymer chain, (1) the α-olefin content of the copolymer being at least 50 mole percent, (2) the unsaturated carboxylic acid content of the copolymer being from about 0.2 to about 25 mole percent, and (3) any other monomer component optionally copolymerized in said copolymer being monoethylenically unsaturated, and

(B) said graft copolymer being obtained by grafting 0.1 to 5 percent by weight of α,β-unsaturated carboxylic acid having 3 to 8 carbon atoms or an unsaturated carboxylic acid anhydride onto a preformed polyolefin backbone derived from ethylene or ethylene and $C_3$ to $C_8$ α-olefin, in which polyolefin backbone any other optionally copolymerized monomer component is monoethylenically unsaturated,

said direct or graft acid copolymers having been ionized by neutralization with divalent lead ions, using from above 1 to about 3 times the amount of lead salt necessary to neutralize all of the copolymerized acid, said ionic copolymers having solid state properties characteristic of crosslinked polymers and melt-fabricability properties characteristic of uncrosslinked thermoplastic polymers.

AD-5157

0141630

2.  The ionic copolymer of Claim 1 wherein the copolymer is direct copolymer, the α-olefin is ethylene and the unsaturated carboxylic acid is monocarboxylic.

3.  The ionic copolymer of Claim 2 wherein the amount of lead salt used is from about 1.25 to about 2.5 times the amount necessary to neutralize all of the copolymerized acid, the ethylene content of the copolymer is from about 80 to about 98 mole percent, and the unsaturated carboxylic acid content of the copolymer is from about 20 to about 2 mole percent.

4.  The ionic copolymer of Claim 3 wherein the unsaturated carboxylic acid is acrylic acid.

5.  The ionic copolymer of Claim 3 wherein the unsaturated carboxylic acid is methacrylic acid.

6.  The ionic copolymer of Claim 3 wherein the copolymer is an interpolymer of ethylene, methacrylic acid and a third copolymerizable monomer.

7.  The ionic copolymer of Claim 6 wherein the third copolymerizable monomer is vinyl acetate.

8.  The ionic copolymer of Claim 6 wherein the third copolymerizable monomer is n-butyl acrylate.

9.  The ionic copolymer of any one of Claims 3 to 8 wherein the amount of lead salt used is from about 1.75 to about 2.25 times the amount necessary to neutralize all of the copolymerized acid, the ethylene content of the copolymer is from about 91 to about 96 mole percent and the unsaturated carboxylic acid content of the copolymer is from about 4 to about 9 mole percent.

10.  The ionic copolymer of Claim 1 wherein the copolymer is graft copolymer.

11.  The ionic copolymer of Claim 1 wherein the copolymer is a blend of direct copolymer and graft copolymer.

0141630

22

12. The product of any one of Claims 3 to 9 in film form.

13. The product of any one of Claims 3 to 9 in sheet form.

14. The product of any one of Claims 3 to 9 in the form of a coating.